# FASCICULE DE BREVET EUROPEEN

(11) **EP 2 039 970 B1**
(45) Date de publication et mention de la délivrance du brevet: **07.11.2012**
(21) Numéro de dépôt: 08165034.3
(22) Date de dépôt: 24.09.2008
(51) Int. Cl.: F16L 1/024, F16L 1/06

(54) **Dispositif de raccordement et/ou support de canalisations lisses ou annelés avec réglage de hauteur pour drainage, épandage, évacuation où une maîtrise de la pente est nécessaire**
Anschlussvorrichtung und/oder Träger von glatten oder gewellten Leitungen mit Höhenregulierung für Dränage, Verteilung und Abführung, bei der eine Überwindung der Neigung erforderlich ist
Device for connecting and/or supporting smooth or corrugated duct with height adjustment for drainage, spreading, evacuation where tilt control is required

(30) Priorité: 24.09.2007 FR 0706684
(43) Date de publication de la demande: 25.03.2009
(73) Titulaire: Cordelier, André Louis Roger, 35131 Chartres de Bretagne (FR)
(72) Inventeur: Cordelier, André Louis Roger, 35131 Chartres de Bretagne (FR)
(74) Mandataire: Bioret, Ludovic

(56) Documents cités:
- EP-A- 0 020 232
- DE-U1- 20 007 549
- FR-A- 2 442 366
- US-A- 3 228 679
- US-A- 4 268 189
- US-A- 5 042 958
- US-A- 5 242 247

## Description

### 1. Domaine de l'invention

Le domaine de l'invention est celui du montage et de l'assemblage de canalisation.

Plus précisément, l'invention concerne un dispositif qui permette un montage simple et rapide des canalisations.

### 2. Solutions de l'art antérieur

Habituellement, pour installer des canalisations de drainage ou d'évacuation, une tranchée est faite à une profondeur suffisante pour poser la canalisation. Le fond est recouvert de gravier et la mise à niveau avec une pente suffisante doit être prévue. Cette opération est réalisée de manière manuelle, par un utilisateur. Souvent la boue et l'eau ne facilitent pas la pose et le raccordement. Cette opération est encore complexifiée lorsqu'il est nécessaire de réaliser un collage des canalisations.

Une fois la tranchée recouverte, la fonction d'épandage ou d'évacuation se fait plus ou moins bien sans possibilité toutefois d'intervenir pour y remédier, sauf en découvrant à nouveau les canalisations.

Les solutions de pose et de raccordement de l'art antérieur ne sont donc pas satisfaisante, car essentiellement liées à la mise en oeuvre manuelle d'une pente à l'aide d'un lit de sable et ou de gravier et à la pose, à même le sol des canalisations, sans possibilité de réintervenir par la suite sur cet agencement de manière aisée.

Le document DE 200 07 549 U1 (BREHL WINFRIED [DE]) du 14 décembre 2000 présente un dispositif d'aide à la pose de canalisation dans lequel un collier avec une tige moulée est décrit. Ce collier est moulé dans un piquet qui est enfoncé dans le sol et pour lequel il est possible d'ajuster la hauteur de en plaçant, au sein de trous espacés de 10 millimètres, une tige de blocage.

Le dispositif décrit dans ce document ne permet cependant pas d'ajuster finement (par pas inférieur à 10 millimètres) la hauteur de la canalisation.

### 3. Résumé de l'invention

L'invention ne présente pas ces inconvénients de l'art antérieur. En effet, l'invention concerne un dispositif pour le raccordement et/ou le support de canalisations lisses ou annelées.

Selon l'invention, un tel dispositif comprend :
- une bride de serrage en une ou plusieurs parties montée sur une platine la bride de serrage recevant une canalisation;
- un piquet sur lequel ladite platine est enchâsée, ledit piquet étant adapté pour être implanté dans le sol ;
- des moyens de réglage en hauteur de ladite platine sur ledit piquet, afin d'ajuster la hauteur de ladite canalisation par rapport au sol.

Selon une caractéristique particulière de l'invention, ladite bride de serrage comprend des moyens de maintien d'au moins deux canalisations et des moyens de réception d'un manchonnage entre lesdites canalisations.

Selon un mode de réalisation particulier de l'invention, ledit dispositif comprend en outre un déport rigide sur le piquet qui facilite l'enfonçage au pied par un utilisateur dans une tranchée ou un sol.

Selon un mode de réalisation particulier de l'invention, ladite bride de serrage peut être ouverte sur le dessus pour permettre l'introduction desdites canalisations et en ce que lesdits moyens de maintien comprennent chacun deux voiles déformables bloquant hermétiquement lesdites canalisations, en se refermant l'une sur l'autre.

Selon une caractéristique particulière de l'invention, ledit voile déformable assurent une étanchéité desdites canalisations lorsqu'elles ne sont pas manchonnées.

Selon un mode de réalisation original de l'invention, lesdits moyens de réception de ladite bride de serrage définissent un emplacement permettant la fixation desdites canalisation lorsque celles-ci sont assemblées par un manchon.

Selon une caractéristique particulière de l'invention, le diamètre de réception des canalisations de ladite bride est légèrement inférieure au diamètre desdites canalisations, afin de les maintenir serrées.

Selon un mode de réalisation particulier de l'invention, ladite bride de serrage comprend une partie supérieure de type couvercle qui se verrouille facilement et durablement par simple pression.

Selon une caractéristique particulière de l'invention, ladite partie supérieure de type couvercle présente une possibilité de réouverture de ladite bride.

Selon un mode de réalisation particulier de l'invention, lesdits moyens de réglage en hauteur comprennent une molette filetée de type écrou sur laquelle vient s'enchâsser ladite platine, ladite molette pouvant être mise en rotation sur une vis filetée dudit piquet.

Selon une caractéristique particulière de l'invention ladite platine comprend une languette de centrage solidaire de ladite platine et glissant dans une rainure dudit piquet pendant la rotation de ladite molette filetée sur ladite vis assurant un guidage vertical de l'ensemble de ladite platine.

Selon un mode de réalisation particulier de l'invention, ladite languette de centrage permet une introduction de ladite platine dans ladite molette et sa retenue grâce à un rebord inférieur solidaire de ladite molette.

Selon un mode de réalisation particulier de l'invention, lesdits des moyens de réglage en hauteur de ladite platine sur ledit piquet comprennent en outre des moyens de blocage de ladite platine sur ledit piquet.

Selon un autre aspect, l'invention concerne également un procédé d'ajustement de la hauteur d'un support de canalisations lisses ou annelées. Selon l'invention, un tel procédé comprend :
- une étape d'introduction dans le sol d'un piquet ;
- une étape de vissage d'une molette filetée sur une vis filetée dudit piquet permettant un réglage en hauteur de ladite molette filetée ;
- une étape d'enchâssement d'une platine sur ladite molette filetée, permettant de positionner à la hauteur désirée une bride de serrage de canalisation.

Ainsi, l'invention permet un montage et un réglage rapide de la hauteur d'une ou de plusieurs canalisations, sans qu'il soit nécessaire, comme cela est le cas des procédés de l'art antérieur, de mettre en oeuvre un lit de sable ou de gravillons et d'ajuster la pente de ce lit.

### 4. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue de canalisations manchonnées introduite à l'intérieur de la bride de serrage (clip) ;
- la figure 2 est une vue du dessous du piquet sur lequel vient se visser une molette qui servira de base de réception de la platine ;
- la figure 3 présente la molette et le rebord inférieur de celle-ci qui permet d'accueillir la platine ;
- la figure 4 présente schématiquement le dispositif de l'invention mis en situation ;
- la figure 5 présente une vue en trois dimensions du dispositif selon l'invention ;
- la figure 6 présente une vue de coupe de l'invention.

### 5. Description détaillée de l'invention

### 5.1 Rappel du principe de l'invention

La présente invention a pour objet un dispositif de raccordement et/ou support d'une canalisation avec une autre, sans collage, comme habituellement fait lors d'assemblage de tubes en matière plastique ou composite lisses ou annelés. L'usage en drainage de fondation de construction, en assainissement individuel, en évacuation est facilité pour une pose rapide de qualité en maîtrisant la pente d'écoulement grâce à des moyens de réglage de hauteur des canalisations.

Habituellement, pour cette installation, une tranchée est faite à une profondeur suffisante pour poser la canalisation de drainage ou d'évacuation. Le fond est recouvert de gravier et la mise à niveau avec une pente suffisante doit être prévue, souvent la boue et l'eau ne facilitent pas la pose et le raccordement, et encore moins le collage si il a lieu.

Une fois la tranchée recouverte, la fonction se fait plus ou moins bien sans possibilité d'intervenir pour y remédier, sauf en découvrant à nouveau les canalisations.

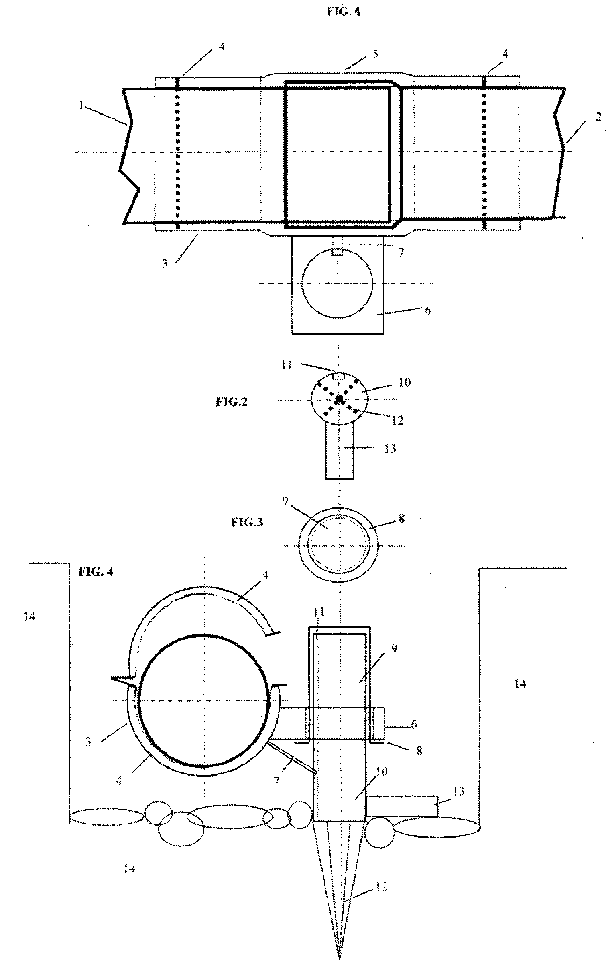

Dans la présente invention, le tube de drainage, d'épandage ou d'évacuation est un tube en matière plastique apprécié pour ses qualités mécaniques, sans toutefois ne pas écarter les autres matériaux disponibles sur le marché. L'invention est présentée en relation avec les figures 1, 2, 3, 4, 5 et 6 dans lesquelles les références numériques relatives aux différents éléments composants l'invention sont utilisées de manière constante pour désigner ces éléments.

Une rigidité du tube sera demandé, et l'opérateur orientera son choix sur un tube bénéficiant d'un classement rigidité connu si possible, en effet les tubes seront positionnés entre les dispositifs (fig.4), sans appuis sur le fond de fouille. L'opérateur réglera les hauteurs des tubes en tournant la molette (9) de réglage de chaque dispositif, la pente sera affinée en apposant un niveau sur les tubes découverts. Ces réglages terminés, le recouvrement des canalisations pourra s'effectuer en versant un gravier dessous et dessus avec une épaisseur suffisante, l'ensemble matérialisant une tranchée filtrante qui facilitera sa fonction drainante en cas de drainage de fondation.

Le raccordement et / ou support des tubes (1,2) est fait par un accessoire, type clip (3) ouvert sur le dessus, en cas de raccordement de tubes d'évacuation, il sera possible de prévoir ce clip (3) en une ou plusieurs parties (31, 32) , la partie supérieure, du type couvercle qui se verrouille facilement et durablement par simple pression, laissera également une possibilité de réouverture. Ce clip (3) est donc une bride de serrage qui permet de maintenir serrée la ou les canalisations montées dans le dispositif Par la suite on utilise indifféremment les termes « clip » ou « bride de serrage ».

En fonction de la longueur totale, il sera possible de placer les dispositifs espacés suivant la longueur des tubes, une préférence sera donné à des tronçons de deux à trois mètres ne provoquant pas de flèche nuisant à la rectitude entre dispositif et les canalisations (1, 2) devant rester perpendiculaires à l'axe de la vis(10) et du piquet (12).

Le montage général des canalisations débutera au départ d'un regard enterré pour joindre un autre regard ou exutoire jusqu'au bouclage complet de la construction dans le cadre de drainage de fondation.

Après pose des canalisations dans les dispositifs, l'opérateur s'assurera de la pente voulue au moyen d'un niveau avant recouvrement de graviers ou de terre.

Le dispositif de raccordement et /ou support comporte deux parties distinctes et complémentaires pour assurer la fonction attendue :
- la fig.1 décrit la partie assemblage et/ou support des tubes (1, 2) qui est dénommée platine (6). Cette platine (6) comprend un clip (3) sorte de selle ouverte en une ou plusieurs parties, se refermant sur les tubes, ce clip (3) sera prévu avec un emplacement plus large (5), afin de recevoir deux tubes assemblés avec un manchon.
   L'ouverture procurée par le clip (3) une fois refermée sera légèrement inférieure au diamètre des canalisations afin de les maintenir serrés à l'intérieur.
   Le clip (3) ouvert sur le dessus facilitant l'introduction des canalisations (1, 2), deux voiles déformables (4) bloquant hermétiquement les canalisations en refermant la partie supérieure et assurant l'étanchéité de l'assemblage en cas de canalisations non manchonnées.
   Par voile déformable on entend un anneau de faible épaisseur en matière plastique souple, donc déformable, solidaire de la bride (3), à l'intérieur sur les parties inférieures et supérieures de celle-ci. Le voile assure que lorsque qu'une canalisation (1, 2) est introduite dans le dispositif et que la partie supérieure de la bride (3) est fermée sur la canalisation (1, 2) qui repose elle-même sur la partie inférieure de la bride (3), l'anneau plastique de faible épaisseur est présent sur la périphérie complète de la canalisation et que la pression des brides sur les canalisations déforme cet anneau pour parfaire l'étanchéité et le maintenir fermement les canalisations (1, 2) à l'intérieur de la bride (3).
- La deuxième partie est un moyen de réglage en hauteur matérialisé par une vis filetée(10) sur une hauteur suffisante qui déterminera la hauteur de réglage maximum en actionnant par rotation une molette (9) filetée type écrou.

La platine (6) située sur le côté du clip (3), afin d'augmenter la latitude de réglage dans une tranchée de faible profondeur sera retenue par un rebord inférieur (8) solidaire de la molette (9) permettant de suivre le mouvement vertical de la molette sans tourner, grâce à une languette de centrage (7) solidaire de la platine (6)qui suit le mouvement vertical dans la vis filetée (10) glissant dans une rainure (11) facilitant l'introduction de la molette (9) par sa souplesse dans la platine (6), cette languette (7) offrant un unique guidage vertical.

Le pas de filetage sera prévu pour une rotation rapide, mais en tenant compte d'un usage en milieu humide ou boueux ou aucun blocage par le milieu ambiant ne devra intervenir.

La vis (10) sera prolongée par un piquet rigide, nervuré pointu (12) à positionnement aisé par un utilisateur dans une tranchée ou dans un sol (14) ou son implantation est possible et facilité par un déport rigide (13) pour un enfonçage au pied.

L'ensemble de ces deux parties constitue un dispositif homogène pour le raccordement et/ou le support avec réglage en hauteur de canalisations diverses en drainage, épandage individuel ou évacuation, ou tout autre contexte ou une pente d'écoulement est nécessaire et déterminante pour le bon fonctionnement attendu dans le milieu du bâtiment, en agriculture ou en industrie, ou autre contexte.

La fabrication du dispositif sera faite de préférence en matières plastiques ou tout autre matériau transformable; toutefois l'emploi d'une résine PVC largement utilisée en accessoires bâtiment conviendra parfaitement pour ses qualités de rigidité.

La réalisation de trois moules sera nécessaires pour injecter la matière, soit :
- un moule pour les parties la platine (6) qui comprend la bride de serrage (3), les voiles déformables (4), la partie plus large (5) la languette de centrage (7) et qui représentent l'ensemble assemblage et /ou support.
- un deuxième moule pour le piquet qui est constitué du piquet permettant l'enfonçage, de la nervure permettant le guidage de la platine, de la vis filetée, etc..
- un troisième pour les parties (8) (9) formant la partie tournante (molette) de surface crantée de préférence pour une meilleure préhension sur laquelle vient se fixer la platine.

La réalisation de ce dispositif de raccordement et/ou de support pouvant être faite industriellement par un procédé d'injection de matière plastique, tout autre procédé de transformation restant possible.

Priorité restant donnée à une solution industrielle économique qui permette une diffusion de masse auprès d'utilisateur en attente d'une nouvelle solution de raccordement et / ou support de canalisation facilitant un réglage précis de la pente d'écoulement, sans contrepente garantissant le bon fonctionnement de drainage, d'épandage, d'évacuation évitant les stagnations en cas de disfonctionnement provoquant des infiltrations dans les constructions, une mauvaise répartition d'effluent en assainissement individuel ou mauvaise évacuation d'eau usée ou pluviale.

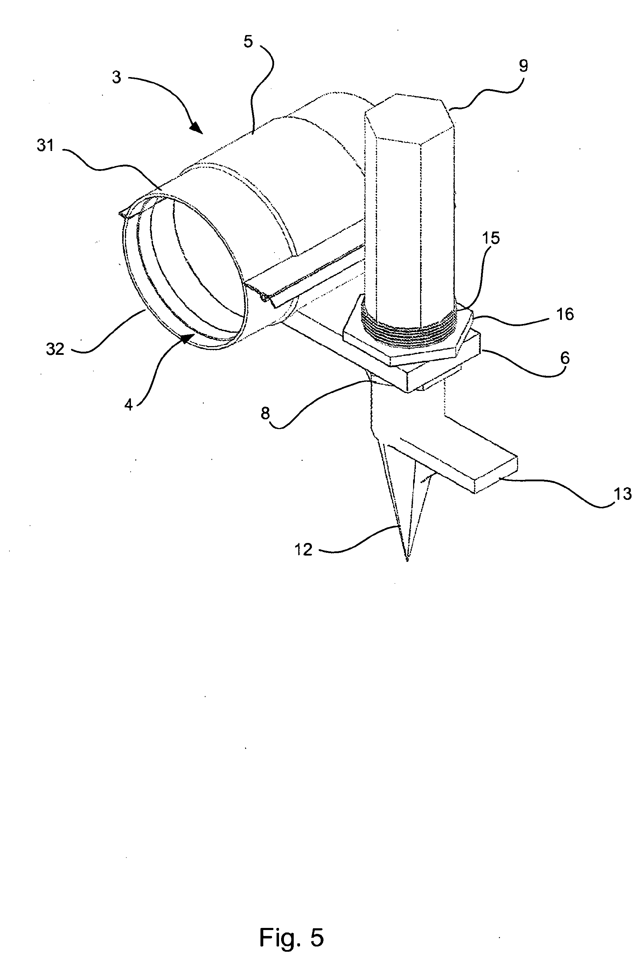

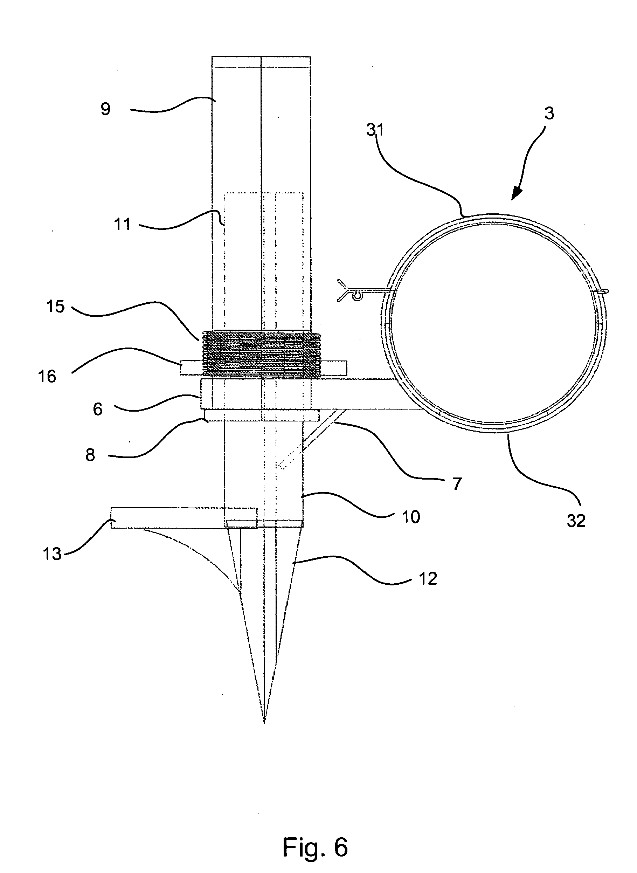

Dans un mode de réalisation spécifique de l'invention, en relation avec les figures 5 et 6, la molette filetée (9) qui prend place sur la vis filetée (10) du piquet (12) peut également comprendre un filetage extérieur périphérique ou non (15) qui permet l'utilisation d'un écrou de sécurité (16) qui sera vissé sur la molette filetée (9) une fois que la platine aura été introduite sur le la molette (9). Cet écrou de sécurité permet d'éviter que la platine ne remonte, et donc que la pente soit faussée, par exemple lorsque les canalisations sont en cours de remblaiement.

Ainsi, la platine est maintenue bloquée.

L'invention rend donc possible, de manière simple, l'ajustement de la hauteur de la canalisation, en ajustant simplement la hauteur du support de canalisations. Pour ce faire, il suffit :
- d'introduire dans le sol (14) d'un piquet (12) ;
- de visser la molette filetée (9) sur la vis filetée (10) du piquet (12) permettant un réglage en hauteur de la molette filetée ;
- d'enchâsser la platine (6) sur la molette filetée (9), permettant de positionner à la hauteur désirée la bride de serrage (3) de canalisation (1, 2).

L'invention n'est nullement limitée à cette mise en oeuvre particulière. Les vis filetées qui servent par exemple au réglage de la hauteur de la molette sur le piquet peuvent être remplacées par tout autre mécanisme qui permet un réglage précis de la hauteur.

De même, la forme de la bride de serrage n'est pas limitée à la forme présentement décrite et peut par exemple permettre le maintien et le serrage de deux groupes de canalisation indépendant, soit positionnées côte à côte, soit positionnées de part et d'autre de la platine. Dans ce dernier cas, la platine peut avoir une forme symétrique qui a l'allure générale d'un huit horizontal.

## Revendications

1. Dispositif pour le raccordement et/ou le support de canalisations lisses ou annelées (1, 2), **caractérisé en ce qu'**il comprend :
- une bride de serrage (3) en une ou plusieurs parties (4) montée sur une platine (6), ladite bride de serrage recevant une canalisation ;
- un piquet (12) sur lequel ladite platine (6) est enchâssée, ledit piquet (12) étant adapté pour être implanté dans le sol (14) ;
- des moyens de réglage en hauteur de ladite platine (6) sur ledit piquet (12), afin d'ajuster la hauteur de ladite canalisation par rapport au sol.

2. Dispositif selon la revendication 1, **caractérisé en ce que** ladite bride (3) de serrage comprend des moyens de maintien (4) d'au moins deux canalisations (1, 2) et des moyens de réception (5) d'un manchonnage entre lesdites canalisations.

3. Dispositif selon la revendication 1, caractérisé en qu'il comprend en outre un déport rigide (13) sur le piquet (12) qui facilite l'enfonçage au pied par un utilisateur dans une tranchée ou un sol (14).

4. Dispositif selon l'une quelconque des revendications 2 et 3, **caractérisé en ce que** ladite bride de serrage (3) peut être ouverte sur le dessus pour permettre l'introduction desdites canalisations (1, 2) et **en ce que** lesdits moyens de maintien comprennent chacun deux voiles déformables (4) bloquant hermétiquement lesdites canalisations (1, 2), en se refermant l'une sur l'autre, un voile déformable étant un anneau de faible épaisseur en matière plastique souple.

5. Dispositif selon la revendication 4, **caractérisé en ce que** ledit voile déformable (4) assurent une étanchéité desdites canalisations (1, 2) lorsqu'elles ne sont pas manchonnées.

6. Dispositif selon l'une quelconque des revendications 1 à 4, **caractérisé en ce que** lesdits moyens de réception (5) de ladite bride de serrage (3) définissent un emplacement permettant la fixation desdites canalisation (1, 2) lorsque celles-ci sont assemblées par un manchon.

7. Dispositif selon l'une quelconque des revendications précédente **caractérisé en ce que** le diamètre de réception des canalisations (1, 2) de ladite bride (3) est légèrement inférieure au diamètre desdites canalisations (1, 2), afin de les maintenir serrées.

8. Dispositif selon l'une quelconque des revendications 1 à 7, **caractérisé en ce que** ladite bride de serrage (3) comprend une partie supérieure de type couvercle qui se verrouille facilement et durablement par simple pression.

9. Dispositif selon la revendication 8, **caractérisé en ce que** ladite partie supérieure de type couvercle présente une possibilité de réouverture de ladite bride (3).

10. Dispositif selon l'une quelconque des revendications 1 à 9, **caractérisé en ce que** lesdits moyens de réglage en hauteur comprennent une molette filetée (9) de type écrou sur laquelle vient s'enchâsser ladite platine (6), ladite molette (9) pouvant être mise en rotation sur une vis filetée (10) dudit piquet (12).

11. Dispositif selon la revendication 10, **caractérisé en ce que** ladite platine (6) comprend une languette de centrage (7) solidaire de ladite platine (6) et glissant dans une rainure (11) dudit piquet (12) pendant la rotation de ladite molette filetée (9) sur ladite vis (10) assurant un guidage vertical de l'ensemble de ladite platine (6).

12. Dispositif selon la revendication 11, **caractérisé en ce que** ladite languette de centrage (7) permet une introduction de ladite platine (6) dans ladite molette (9) et sa retenue grâce à un rebord inférieur (8) solidaire de ladite molette (9).

13. Dispositif selon l'une quelconque des revendications précédentes **caractérisé en ce que** lesdits des moyens de réglage en hauteur de ladite platine (6) sur ledit piquet (12) comprennent en outre des moyens de blocage (15, 16) de ladite platine (6) sur ledit piquet (12).

14. Procédé d'ajustement de la hauteur d'un support de canalisations lisses ou annelées (1, 2), **caractérisé en ce qu'**il comprend :
- une étape d'introduction dans le sol (14) d'un piquet (12) ;
- une étape de vissage d'une molette filetée (9) sur une vis filetée (10) dudit piquet (12) permettant un réglage en hauteur de ladite molette filetée ;
- une étape d'enchâssement d'une platine (6) sur ladite molette filetée (9), permettant de positionner à la hauteur désirée une bride de serrage (3) de canalisation (1, 2).

## Claims

1. Device for connecting and/or supporting smooth or corrugated pipes (1, 2), **characterised in that** it comprises:
- a clamping collar (3) in one or several parts (4) mounted on a plate (6), said clamping collar being able to receive a pipe;
- a stake (12) on which said plate (6) is set, said stake (12) being adapted for implantation into the ground (14);
- means for adjusting the height of said plate (6) on said stake (12), so as to adjust the height of said pipe in relation to the ground.

2. Device according to claim 1, **characterised in that** said clamping collar (3) comprises means (4) for holding at least two pipes (1, 2) and means for receiving (5) a sleeve union between said pipes.

3. Device according to claim 1, **characterised in that** it additionally comprises a rigid offshoot (13) on the stake (12) which facilitates embedding in a trench or the ground (14) by the user's foot.

4. Device according to any one of claims 2 and 3, **characterised in that** said clamping collar (3) can be open at the top to allow insertion of said pipes (1, 2) and **in that** said holding means each comprise two deformable swathes (4) tightly locking said pipes (1, 2), by closing one on the other, one deformable swathe being a thin ring of flexible plastic.

5. Device according to claim 4, **characterised in that** said deformable swathes (4) ensures the leaktightness of said pipes (1, 2) when they are not joined together.

6. Device according to any one of claims 1 to 4, **characterised in that** said receiving means (5) for said clamping collar (3) define a location for attaching said pipes (1, 2) when they are assembled by a sleeve union.

7. Device according to any one of the preceding claims, **characterised in that** the diameter of said collar (3) for receiving the pipes (1, 2) is slightly less than the diameter of said pipes (1, 2), so as to hold them tight.

8. Device according to any one of claims 1 to 7, **characterised in that** said clamping collar (3) comprises an upper part in the form of a cover which locks easily and durably simply by applying pressure.

9. Device according to claim 8, **characterised in that** said upper part in the form of a cover presents the possibility of re-opening said collar (3).

10. Device according to any one of claims 1 to 9, **characterised in that** said height adjustment means comprise a threaded knob (9) in the form of a nut whereon is mounted said plate (6), said knob (9) being capable of rotation on a screw thread (10) on said stake (12).

11. Device according to claim 10, **characterised in that** said plate (6) comprises a centering tab (7) integral with said plate (6) and sliding in a groove (11) of said stake (12) during rotation of said threaded knob (9) on said screw (10) providing vertical guidance of said plate assembly (6).

12. Device according to claim 11, **characterised in that** said centering tab (7) permits insertion of said plate (6) into said knob (9) and retention thereof by means of a lower flange (8) integral with said knob (9).

13. Device according to any one of the preceding claims, **characterised in that** said means for adjusting the height of said plate (6) on said stake (12) additionally comprise means (15, 16) for locking said plate (6) on said stake (12).

14. Method for adjusting the height of a support for smooth or corrugated pipes (1, 2), **characterised in that** it comprises:
- a step of implanting a stake (12) into the ground (14);
- a step of screwing a threaded knob (9) on a screw thread (10) of said stake (12) for adjusting the height of said threaded knob;
- a step of setting a plate (6) on said threaded knob (9), making it possible to position a collar (3) for clamping the pipe (1, 2) at the desired height.

## Patentansprüche

1. Anschlussvorrichtung und/oder Träger für glatte oder gewellte Leitungen (1, 2), **dadurch gekennzeichnet, dass** sie folgendes umfasst:
- einen Klemmflansch (3) in einem oder mehreren Teilen (4), der auf einer Platte (6) montiert ist, wobei der Klemmflansch eine Leitung aufnimmt;
- einen Pflock (12), auf den die Platte (6) aufgesetzt ist, wobei der Pflock (12) dazu vorgesehen ist, in den Boden (14) gesteckt zu werden;
- Mittel zur Höhenverstellung der Platte (6) auf dem Pflock (12), um die Höhe der Leitung in Bezug zum Boden anzupassen.

2. Vorrichtung nach Anspruch 1, **dadurch gekennzeichnet, dass** der Klemmflansch (3) Mittel (4) zum Halten mindestens zweier Leitungen (1, 2) und Mittel für die Aufnahme (5) von Muffen zwischen den Leitungen umfasst.

3. Vorrichtung nach Anspruch 1, **dadurch gekennzeichnet, dass** sie ferner einen starren Versatz (13) auf dem Pflock (12) umfasst, der das Einstecken am Fuß durch einen Benutzer in einen Graben oder einen Boden (14) erleichtert.

4. Vorrichtung nach einem der Ansprüche 2 und 3, **dadurch gekennzeichnet, dass** der Klemmflansch (3) oben offen sein kann, um die Einführung der Leitungen (1, 2) zu ermöglichen, und dass die Haltemittel jeweils zwei verformbare (4) Flächen umfassend, die die Leitungen (1, 2) hermetisch dicht feststellen, wobei sie sich übereinander schließen, wobei eine verformbare Fläche ein Ring von geringer Dicke aus weichem Kunststoff ist.

5. Vorrichtung nach Anspruch 4, **dadurch gekennzeichnet, dass** die verformbar Fläche (4) eine Abdichtung der Leitungen (1, 2) sicherstellt, wenn sie nicht mit Muffen versehen sind.

6. Vorrichtung nach einem der Ansprüche 1 bis 4, **dadurch gekennzeichnet, dass** die Aufnahmemittel (5) des Klemmflansches (3) eine Stelle definieren, die die Befestigung der Leitungen (1, 2) ermöglicht, wenn sie durch eine Muffe zusammengefügt sind.

7. Vorrichtung nach einem der vorhergehenden Ansprüche, **dadurch gekennzeichnet, dass** der Durchmesser für die Aufnahme der Leitungen (1, 2) des Flansches (3) etwas kleiner als der Durchmesser der Leitungen (1, 2) ist, um sie festgeklemmt zu halten.

8. Vorrichtung nach einem der Ansprüche 1 bis 7, **dadurch gekennzeichnet, dass** der Klemmflansch (3) einen oberen Teil vom Typ Deckel umfasst, der sich einfach und dauerhaft durch einfachen Druck schließt.

9. Vorrichtung nach Anspruch 8, **dadurch gekennzeichnet, dass** der obere Teil vom Typ Deckel eine Möglichkeit des Wiederöffnens des Flansches (3) aufweist.

10. Vorrichtung nach einem der Ansprüche 1 bis 9, **dadurch gekennzeichnet, dass** die Mittel zur Höhenverstellung ein Gewinderad (9) vom Typ Mutter umfassen, auf das die Platte (6) aufgesetzt wird, wobei das Rad (9) auf einer Gewindeschraube (10) des Pflocks (12) in Drehung versetzt werden kann.

11. Vorrichtung nach Anspruch 10, **dadurch gekennzeichnet, dass** die Platte (6) eine Zentrierlasche (7) umfasst, die mit der Platte (6) verbunden ist und in einer Nut (11) des Pflocks (12) während der Drehung des Gewinderades (9) auf der Schraube (10) gleitet, wodurch die Vertikalführung der Platteneinheit (6) sichergestellt wird.

12. Vorrichtung nach Anspruch 11, **dadurch gekennzeichnet, dass** die Zentrierlasche (7) eine Einführung der Platte (6) in das Rad (9) und ihren Halt dank eines unteren Randes (8), der mit dem Rad (9) verbunden ist, ermöglicht.

13. Vorrichtung nach einem der vorhergehenden Ansprüche, **dadurch gekennzeichnet, dass** die Mittel zur Höhenverstellung der Platte (6) auf dem Pflock (12) ferner Mittel (15, 16) zur Feststellung der Platte (6) auf dem Pflock (12) umfassen.

14. Verfahren zur Anpassung der Höhe eines Trägers von glatten oder gewellten Leitungen (1, 2), **dadurch gekennzeichnet, dass** es umfasst:
- einen Schritt des Einsteckens eines Pflocks (12) in den Boden (14);
- einen Schritt des Schraubens eines Gewinderades (9) auf eine Gewindeschraube (10) des Pflocks (12), der eine Höhenverstellung des Gewinderades ermöglicht;
- einen Schritt des Aufsetzens einer Platte (6) auf das Gewinderad (9), der es ermöglicht, einen Klemmflansch (3) einer Leitung (1, 2) auf der gewünschten Höhe zu positionieren.
